# EUROPEAN PATENT SPECIFICATION

(11) **EP 2 750 883 B1**
(45) Date of publication and mention of the grant of the patent: **28.11.2018**
(21) Application number: 12826979.2
(22) Date of filing: 03.09.2012
(51) Int. Cl.: B32B 21/04, E04F 15/02, B27M 3/04, E04F 15/18, E04F 15/04, B32B 21/08, E04F 15/10, E04C 2/10, B32B 9/02, B32B 3/06, B32B 3/18, E04F 15/20, B32B 21/14

(54) **COMPOSITE PANEL COMBINATION, METHOD OF PRODUCING THE SAME AND USE OF IT**
VERBUNDPLATTENKOMBINATION, VERFAHREN ZU IHRER HERSTELLUNG UND IHRE VERWENDUNG
COMBINAISON DE PANNEAUX COMPOSITES, PROCÉDÉ DE PRODUCTION DE CELLE-CI ET UTILISATION

(30) Priority: 02.09.2011 FI 20115863
(43) Date of publication of application: 09.07.2014
(73) Proprietor: Metsäliitto Osuuskunta, 02100 Espoo (FI)
(72) Inventor: KAINUMAA, Sakari, FI-15100 Lahti (FI); SOKKA, Kasperi, FI-44201 Suolahti (FI)
(74) Representative: Seppo Laine Oy
(86) International application number: PCT/FI2012/050852
(87) International publication number: WO 2013/030464

(56) References cited:
- WO-A1-03/084746
- WO-A1-2005/044555
- WO-A1-2011/101546
- FI-A- 20 105 162
- JP-A- H02 161 061
- JP-A- H03 281 862
- JP-A- H04 209 254
- JP-A- H07 314 594
- JP-U- H0 451 533
- US-A1- 2009 183 457

## Description

The present invention relates to a composite panel combination according to the preamble to Claim 1.

Such a panel consists of two wood-based panels or veneers and an insulation layer fitted between them.

The invention further relates to a manufacturing method for the composite panel combination according to any of Claims 1-6 as well as a use of a composite panel combination according to any of Claims 1-6.

The manufacture of composite panels is conventional technology. Thus, various types of composite panel are previously known, which are manufactured by combining a wood-based material and at least one other material. In the manufacture of composite panel, an attempt is made to maximize the materials' good properties and minimize their bad properties. Composite panels are manufactured by combining different raw materials - i.e. components consisting of wood and non-wood raw materials - in order to create a composite panel. Composite panels are also manufactured by surfacing, for example, wood panels with various materials. The use of various types of compression methods in the manufacture of various types of composite panels is also previously known.

Plywood panels have been used in floor structures as basepanels for various types of surface layers, such as parquet. Such parquet panels are usually attached to each other by tongue-and-groove joints. A drawback is that parquet panels have rather poor sound-insulation ability; parquet "clatters". In addition, when installed in place parquet often creaks when someone steps onto it. This is partly due to the fact that a wood-based parquet structure is not completely dimensionally stable, but lives according to the atmospheric humidity.

For example, document JP H0451533U discloses a composite panel wherein at the side edge, the successive layers of the composite panel overlap each other and extend at different distances into the tongue-and-groove joint.

Document WO2005/044555A1 further discloses a sound dampening laminate including a fiberboard core interposed between two resin impregnated paper layers, one of the paper layers being a design layer comprising a design and the paper layer opposite the design layer being a balancing layer. The fiberboard core has a sound dampening feature, such as a plurality of grooves penetrating from the exposed surface of the balancing layer into the fiberboard core, an energy-absorbing layer interposed between two fiberboard material layers, two layers having different resonant properties or a combination of those features. A sound dampening material, such as silicone rubber, butyl caulk, polyurethane elastomers, ethylene vinyl acetate, or acrylic viscoelastic polymers may be positioned within the grooves.

The present invention is intended to eliminate the drawbacks associated with the prior art and create a new type of composite panel combination. The invention is particularly intended to create a composite panel combination, which is suitable for use, for example, as a component of parquet.

The invention is also intended to create a composite panel that can be easily attached to adjacent composite panels, for example with the aid of tongue-and-groove joints, in order to achieve a composite-panel combination (i.e. a sub-structure carrying the surface layer of a floor), which is sturdy and well-insulated both acoustically and thermally. One particular aim is then to create a sub-structure, which will not creak when someone steps onto it, or as a result of variations in humidity.

The invention is also intended to create a composite panel containing a layer, which has an ability to insulate in terms of sound, heat, or moisture, or a combination of these.

According to one aspect of the present invention, a composite panel combination comprising a first composite panel and a second composite panel is provided, wherein the composite panels comprise at least two wood-based panels and a first insulating layer fitted between said wood-based panels and other insulating layers fitted on both sides of said wood- based panels, wherein said wood-based panels and said insulating layers, which are sound-isolation layers, are attached to each other by gluing with the aid of a single pressing, the first composite panel is arranged to be attached to the second adjacent composite panel with the aid of tongue-and groove joint, wherein said tongue-and groove joint comprising a female profile having a groove, and a protrusion is equipped with elements which form a locking arrangement, and within the groove and/or the protrusion of side edges of the composite panels, the successive layers of the composite panels are arranged to overlap each other and to extend at different distances into the tongue-and-grove joint.
In addition, the intention is to create a method suitable for manufacturing base plywood for parquet or a corresponding component of parquet.

The invention is based on the idea of forming a composite panel, which contains at least two wood-based panels and an insulation layer fitted between them. According to the invention, insulating layers are arranged on at least one side of the wood-based panels of the composite structure, preferably on both sides of at least one wood-based panel.

According to an especially preferred embodiment, at least one insulation layer extends over the wood layer in such a way that can press tightly against the edge of another composite panel fitted next to the composite panel.

In the preferred embodiment, there is thus a first part, for example the female or male part, of a tongue-and-groove joint formed in at least one edge of the composite panel, so that the said insulation layer extends into this part of the tongue-and-groove joint.

The invention relates to a composite-panel combination, which includes a first composite panel and a second composite panel to be fitted next to it. According to the invention, the composite panels are attached to each other with the aid of a tongue-and-groove joint, preferably the locking arrangement of a tongue-and-groove joint.

The invention additionally relates to a method for manufacturing a composite panel. The method is characterized by adhesive layers being introduced between the panel's wood-panel or veneer layers and the insulation layers and the layers being stacked on top of each other in a preselected order and joined together during the same pressing.

More specifically, the composite panel combination according to the invention is characterized by what is stated in the characterizing portion of Claim 1.

The method according to the invention for manufacturing a composite panel combination is characterized by what is stated in the characterizing portion of Claim 7.

Considerable advantages are gained by means of the invention. Thus, the present composite panel, when used as base plywood, has excellent insulation ability in terms of sound, heat, and/or moisture. The insulation layers attenuate especially effectively the sounds that arise due to the mutual movement of adjacent panels, for example when someone steps on installed parquet. In addition to this, the insulation layers attenuate sounds of steps (clatter), as well as effectively reducing the penetration of moisture into the base structure. A composite structure is created, which is considerably more dimensionally stable than conventional ones.

In the following, the invention will be examined with the aid of a detailed description, with reference to the accompanying drawing.

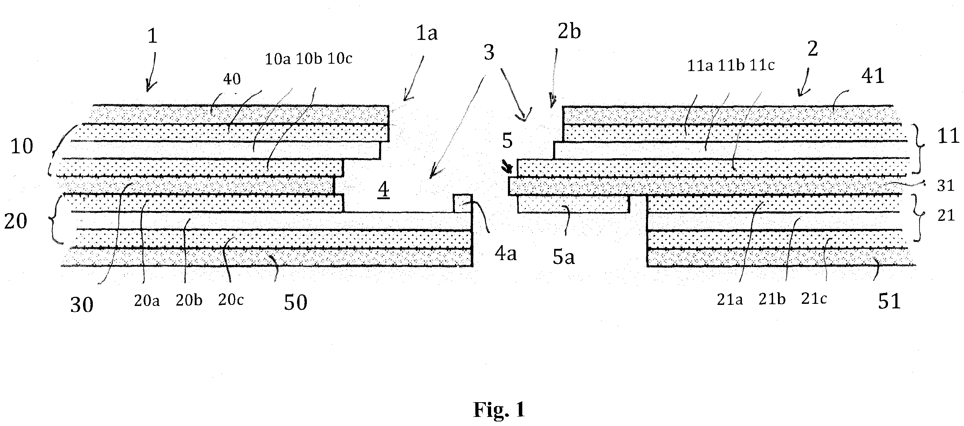

Figure 1 shows a cross-section of the construction of two composite panels according to the invention to be attached to each other.

Figure 1 shows the construction of two composite panels 1 and 2 according to the invention.

The composite panel 1 contains two wood-based panels 10 and 20, between which an insulation layer 30 is fitted. The wood-based panel 10 and/or 20 can be a ready plywood panel, which consists of several, typically at least three, wood veneers 10a, 10b, 10c; 20a, 20b, 20c, glued to each other, or a solid wood panel, chippanel, wood-fibre panel, or any other wood-based panel whatever. Alternatively, the wood-based panel (10 and/or 20) can be a stack formed of separate wood veneers 10a, 10b, 10c; 20a, 20b, 20c.

Insulation layers 40, 50 are fitted on both sides of the wood-based panels 10, 20. The composite panel is manufactured in such a way that the wood-based panels 10, 20 (or the wood-veneer packages 10a, 10b, 10c; 20a, 20b, 20c forming the panels 10 and/or 20) and the insulation layers (30, 40, 50) are equipped with adhesive layers (not shown in the figure), stacked on top of each other in the order shown, and joined to each other by a single pressing.

The wood veneers 10a, 10b, 10c; 20a, 20b, 20c are suitably deciduous-wood veneers (birch veneers) or coniferous-wood veneers, which are either long-fibre or short-fibre. In the figure, the veneers 10b and 20b can be, for example, short-fibre and the other veneers long-fibre.

The insulation layers 30, 40, and 50 can consist of the same material or of different materials. The most important aspect is that they act as sound and thermal insulations, and possibly also as moisture barriers. If the composite panel is intended to form a component of the base structure carrying the surface layer of a floor, such as parquet, cork or cork-rubber will be a very suitable insulation material.

In the composite panel 2, the reference numbers 11 and 21 refer respectively to wood-based panels; the reference numbers 11a, 11b, 11c; 21a, 21b, 21c refer to wood veneers, and the reference numbers 31, 41, and 51 refer to insulation layers.

Some suitable adhesives for joining wood-based panels, insulation layers, and possibly separate wood veneers to each other are thermoplastic or thermosetting plastic resins, such as phenolformaldehyde (pf), melaminformaldehyde (mf), ureaformaldehyde (uf), polyurethane (pu), methylenediphenylid-isocyanate (mdi), polymeric methylene-diphenylid-isocyanate (pmdi), edmi, or edfi, or some mixture of the aforementioned.

A good moisture barrier is created, for example, by means of a urethane-adhesive joint between the lowest insulation layer (50 or 51) and the layer that comes on top of it.

The actual surface layer, such as parquet blocks or similar, is fitted on top of the composite panels 1 and 2 and the insulation layers 40 and 41.

It can be further seen from Figure 1 that the first composite panel 1 can be attached to a second, adjacent composite panel 2 with the aid of a tongue-and-groove joint 3. The female profile of the tongue-and-groove joint is arranged in the first side edge 1a of the composite panel 1. In this profile there is a groove 4, into which the male-profile protrusion 5 of the tongue-and-groove joint, in the second side edge 2b of the adjacent composite panel 2, can be fitted. The tongue-and-groove joint shown in the figure is a so-called locking tongue-and-groove, which is created in such a way that a protuberance 4a is formed (for example, by machining) in the outer edge of the groove 4 of the composite panel. In connection with the protrusion 5 of the adjacent composite panel 2, a protuberance 5a is formed, in such a way that the width of the protuberance 5 corresponds to the width of the bottom of the groove 4. The elements 4, 4a and 5a then form a locking arrangement for the tongue-and-groove joint 3. Joined together in this way, the composite panels 1 and 2 form a composite-panel combination that will remain a securely cohesive composite-panel combination.

In the opposite side edge (not shown in the figure) of the composite panel 1, the male profile of a tongue-and-groove joint is suitably arranged, so that the composite 1 can be fitted to a second adjacent composite panel, in the side edge of which there is a corresponding female profile.

According to one embodiment, the composite panel 1 can have a tongue-and-groove joint completely around it; in such a way that the end edges too are equipped with tongue-and-groove joint profiles (this solution is not shown in the figure). Thus, the first end edge of the composite panel can be equipped with the male profile of a tongue-and-groove joint and the end edge opposite to it can be equipped with the female profile of a tongue-and-groove joint.

It can be further seen from the figure that, at the side edge 1a, the successive layers 10a, 10b, 10c, 30.... of the composite panel 1 are arranged to overlap and extend for different distances into the tongue-and-groove joint 3. Correspondingly, at the side edge 2b of the composite panel 2, the successive layers 11a, 11b, 11c, 31.... of the composite panel are arranged to overlap and extend for different distances into the tongue-and-groove joint 3. Thus, all the edges of the adjacent layers 10a and 11a, 10b and 11b ...., particularly the edges of the insulation layers 30 and 31 meet, when the composite panels 1 and 2 are joined together.

The tongue-and-groove joint described above gives the structure several advantages. The insulation layers 30, 31 run through the tongue-and-groove joint, and a tight seam is formed between them. Because the successive layers are arranged to overlap, the vertical seams between the adjacent layers will also be located in such a way that, for example, the seam of the uppermost pair of layers (e.g., 10a, 11a) will not be directly aligned above the seam between the lower pair of layers (e.g., 10b, 11b). If a gap arises between a specific pair of layers, such a gap will remain isolated inside the structure. Thus, a channel running through the structure from the surface to the bottom will not arise. This is important in terms of sound insulation, heat insulation, and fire safety. Sound or creaking arises at the point of contact in the wood(veneer)-wood(veneer) combination. This sound or creaking is avoided, if a contact arises at critical points between the wood(veneer)-cork/sound-insulation material, because cork is extremely flexible and elastic and recovers well from compression. When wood becomes wet or dries the change in the moisture gradient causes deformations and these deformations can cause sound or creaking.

The sound-insulation layer also attenuates the sound of steps and prevents, for example, sound in an upper-storey floor coming from the side of the storey beneath.

The composite panel according to the invention is manufactured in such a way that a stack is formed of wood-based panels, or stack is formed of wood-based panels (i.e. a "wood-veneer package"), adhesive layers are introduced between the layers, and the layers are stacked on top of each other in a preselected order, and are joined together by the same pressing (i.e. by a "single pressing").

If desired, a composite panel created in the manner described above can be cut into composite panels with a size of the desired surface area. Tongue-and-groove joints of the desired shape can afterwards be machined into the straight edges of the composite panel.

The composite panel according to the invention can also contain several wood-based panels or wood veneers, several insulation layers of different types, and other structures. According to one embodiment, the final surface layer can be fitted to the upper surface of the composite panel.

The thickness of the composite panel is preferably about 3 - 50 mm, particularly about 10... 25 mm; most suitably about 12 mm.

A layer, which is, for example, of wood or polymer material, forming a parquet surface, can be fitted to the upper surface of the composite panel. The thickness of the layer is about 1 - 15 mm, typically about 1 - 10 mm. According to a preferred embodiment, the layer forming the parquet surface is arranged especially on top of an insulation layer.

In one embodiment, the invention comprises a composite panel of a type, on the upper surface of which, immediately against an insulation layer, is a wood layer, a polymer layer, or a layer consisting of a composite of wood and polymer material, forming a parquet surface.

The invention is not intended to be restricted to only the embodiments described by way of example. The invention is intended to be applied widely, within the scope of protection of the Claims presented hereinafter.

## Claims

1. Composite panel combination comprising a first composite panel (1) and a second composite panel (2) wherein the composite panels (1, 2) comprise at least two wood-based panels (10, 20) and a first insulating layer (30) fitted between said wood-based panels and other insulating layers (40, 50) fitted on both sides of said wood- based panels, wherein
- said wood-based panels and said insulating layers, which are sound-isolation layers, are attached to each other by gluing with the aid of a single pressing,
- the first composite panel (1) is arranged to be attached to the adjacent second composite panel (2) with the aid of a tongue-and groove joint (3),
**characterized in that**
- said tongue-and groove joint (3) comprises a female profile having a groove (4) in one side edge (1a) of the panel and a protrusion (5) in an opposite side edge (2b) of the panel, said groove and said protrusion being equipped with elements (4a, 5a) which form a locking arrangement, and **in that**
- within the groove (4) and/or the protrusion (5) of side edges (1a, 2b) of the composite panels (1, 2), the successive layers (10, 20, 30) of the composite panels (1, 2) are arranged to overlap each other and to extend for different distances into the respective groove or protrusion.

2. Composite panel combination according to Claim 1, **characterized in that** the insulating layers are also thermal-insulation layers or moisture-barrier layers.

3. Composite panel combination according to Claim 1 or 2, **characterized in that** the wood-based panel (10,20) is
- a veneer layer (10a, 10b or 10c; 20a, 20b or 20c), or
- a plywood panel, which comprises several, typically at least three, wood-veneer layers (10a, 10b, 10c; 20a, 20b, 20c) glued to each other, or
- a solid wood panel, or
- chippanel, or
- a wood-fibre panel or similar wood-based panel, or
- a stack formed of separate wood veneers (10a, 10b, 10c; 20a, 20b, 20c).

4. Composite panel combination according to Claim 1 or 2, **characterized in that** the insulation layers (30 - 50) all consist of the same material and are of cork, cork-rubber, or rubber, or a similar flexible material, which has a sound, heat, or fire-insulating effect.

5. Composite panel combination according to Claim 1 or 2, **characterized in that** in an opposite side edge of the first composite panel (1) a male profile of a tongue-and-groove joint (3) is arranged, so that the first composite panel (1) can be fitted to the second adjacent composite panel (2), in the side edge of which there is a corresponding female profile.

6. Composite panel combination according to any of the above Claims, **characterized in that** on the upper surface of the composite panels (1,2) there is a wood or polymer layer forming a parquet surface.

7. Method for manufacturing a composite panel combination according to any of Claims 1-6, **characterized in that**
- the wood-based panels, or stack formed of wood-based panels, and the insulation layers are equipped with adhesive layers,
- the panels or stack, as well as the insulation layers, are stacked on top of each other in a preselected order, after which
- the panels or stack and the insulation layers are attached to each other by means of a single pressing, and
- tongue-and-groove joint profiles of the desired shape are machined into the edges of the composite panels.

8. The method according to Claim 7, **characterized in that** the composite panels obtained are further cut into composite panels with the desired size of surface area.

9. Use of a composite panel combination according to any of Claims 1-6 as a plywood base for parquet or floor parquet.

## Patentansprüche

1. Verbundplattenkombination, umfassend eine erste Verbundplatte (1) und eine zweite Verbundplatte (2), wobei die Verbundplatten (1, 2) mindestens zwei Holzwerkstoffplatten (10, 20) und eine erste Dämmschicht (30), die zwischen den Holzwerkstoffplatten eingepasst ist, und andere Dämmschichten (40, 50) umfassen, die auf beiden Seiten der Holzwerkstoffplatten eingepasst sind, wobei
- die Holzwerkstoffplatten und die Dämmschichten, die Schallisolierschichten sind, durch Verleimen mit Hilfe einer einzigen Pressung miteinander verbunden werden,
- die erste Verbundplatte (1) dazu eingerichtet ist, mit Hilfe einer Nut- und Federverbindung (3) an der benachbarten zweiten Verbundplatte (2) befestigt zu werden,
**dadurch gekennzeichnet, dass**
- die Nut- und Federverbindung (3) ein Innenprofil mit einer Nut (4) in einer Seitenkante (1a) der Platte und einem Vorsprung (5) in einer gegenüberliegenden Seitenkante (2b) der Platte umfasst, wobei die Nut und der Vorsprung mit Elementen (4a, 5a) ausgestattet sind, die eine Verriegelungsanordnung bilden, und dass
- innerhalb der Nut (4) und/oder des Vorsprungs (5) der Seitenkanten (1a, 2b) der Verbundplatten (1, 2) die aufeinanderfolgenden Schichten (10, 20, 30) der Verbundplatten (1, 2) so angeordnet sind, dass sie einander überlappen und sich für unterschiedliche Abstände in die jeweilige Nut oder den Vorsprung erstrecken.

2. Verbundplattenkombination nach Anspruch 1, **dadurch gekennzeichnet, dass** die Dämmschichten auch Wärmedämmschichten oder Feuchtigkeitssperrschichten sind.

3. Verbundplattenkombination nach Anspruch 1 oder 2, **dadurch gekennzeichnet, dass** die Holzwerkstoffplatte (10, 20)
- eine Furnierschicht (10a, 10b oder 10c; 20a, 20b oder 20c) oder
- eine Sperrholzplatte, die mehrere, typischerweise mindestens drei, miteinander verklebte Holzfurnierschichten (10a, 10b, 10c; 20a, 20b, 20c) umfasst, oder
- eine Massivholzplatte oder
- Spanplatte, oder
- eine Holzfaserplatte oder eine ähnliche Holzwerkstoffplatte oder
- ein Stapel aus einzelnen Holzfurnieren (10a, 10b, 10c; 20a, 20b, 20c) ist.

4. Verbundplattenkombination nach Anspruch 1 oder 2, **dadurch gekennzeichnet, dass** die Dämmschichten (30 - 50) alle aus dem gleichen Material bestehen und aus Kork, Kork-Gummi oder Gummi oder einem ähnlichen flexiblen Material bestehen, das eine schall-, wärme- oder feuerdämmende Wirkung aufweist.

5. Verbundplattenkombination nach Anspruch 1 oder 2, **dadurch gekennzeichnet, dass** in einer gegenüberliegenden Seitenkante der ersten Verbundplatte (1) ein Außenprofil einer Nut- und Federverbindung (3) angeordnet ist, so dass die erste Verbundplatte (1) an der zweiten benachbarten Verbundplatte (2) anbringbar ist, in deren Seitenkante sich ein entsprechendes Innenprofil befindet.

6. Verbundplattenkombination nach einem der vorstehenden Ansprüche, **dadurch gekennzeichnet, dass** auf der Oberseite der Verbundplatten (1, 2) eine Holz- oder Polymerschicht vorhanden ist, die eine Parkettoberfläche bildet.

7. Verfahren zur Herstellung einer Verbundplattenkombination nach einem der Ansprüche 1-6, **dadurch gekennzeichnet, dass**
- die Holzwerkstoffplatten oder Stapel aus Holzwerkstoffplatten und die Dämmschichten mit Klebeschichten ausgestattet sind,
- die Platten oder Stapel sowie die Dämmschichten in einer vorgewählten Reihenfolge übereinander gestapelt werden, wonach
- die Platten oder Stapel und die Dämmschichten durch eine einzige Pressung miteinander verbunden werden und
- in die Kanten der Verbundplatten Nut- und Federverbindungsprofile der gewünschten Form eingearbeitet.

8. Verfahren nach Anspruch 7, **dadurch gekennzeichnet, dass** die erhaltenen Verbundplatten weiter in Verbundplatten mit der gewünschten Größe der Oberfläche geschnitten werden.

9. Verwendung einer Verbundplattenkombination nach einem der Ansprüche 1-6 als Sperrholzunterlage für Parkett oder Fußbodenparkett.

## Revendications

1. Combinaison de panneau composite comprenant un premier panneau composite (1) et un second panneau composite (2), dans laquelle les panneaux composites (1, 2) comprennent au moins deux panneaux à base de bois (10, 20) et une première couche isolante (30) insérée entre lesdits panneaux à base de bois et d'autres couches isolantes (40, 50) insérées sur les deux côtés desdits panneaux à base de bois, dans laquelle
- lesdits panneaux à base de bois et lesdites couches isolantes, qui sont des couches insonorisées, sont fixés les uns aux autres par collage à l'aide d'un simple pressage,
- le premier panneau composite (1) est agencé pour être fixé au second panneau composite adjacent (2) à l'aide d'un joint à rainure et languette (3),
**caractérisée en ce que**
- ledit joint à rainure et languette (3) comprend un profil femelle présentant une rainure (4) dans une arête latérale (1a) du panneau et une saillie (5) dans une arête latérale opposée (2b) du panneau, ladite rainure et ladite saillie étant équipées d'éléments (4a, 5a) qui forment un agencement de verrouillage, et **en ce que**
- dans la rainure (4) et/ou la saillie (5) d'arêtes latérales (1a, 2b) des panneaux composites (1, 2), les couches successives (10, 20, 30) des panneaux composites (1, 2) sont agencées pour se chevaucher les unes les autres et pour s'étendre pour différentes distances dans la rainure ou saillie respective.

2. Combinaison de panneau composite selon la revendication 1, **caractérisée en ce que** les couches isolantes sont aussi des couches d'isolation thermique ou des couches de barrière d'humidité.

3. Combinaison de panneau composite selon la revendication 1 ou 2, **caractérisée en ce que** le panneau à base de bois (10, 20) est
- une couche de placage (10a, 10b ou 10c ; 20a, 20b ou 20c), ou
- un panneau de contreplaqué qui comprend plusieurs, typiquement au moins trois, couches de placage de bois (10a, 10b, 10c ; 20a, 20b, 20c) collées les unes aux autres, ou
- un panneau de bois solide, ou
- un panneau de particules ou
- un panneau de fibre de bois ou panneau à base de bois similaire ou
- une pile formée de placages de bois séparés (10a, 10b, 10c ; 20a, 20b, 20c).

4. Combinaison de panneau composite selon la revendication 1 ou 2, **caractérisée en ce que** les couches d'isolation (30-50) se composent toutes du même matériau et sont en liège, liège-caoutchouc, ou caoutchouc ou un matériau flexible similaire qui possède un effet sonore, thermique ou ignifuge.

5. Combinaison de panneau composite selon la revendication 1 ou 2, **caractérisée en ce que**, dans une arête latérale opposée du premier panneau composite (1), un profil mâle d'un joint à rainure et languette (3) est agencé de sorte que le premier panneau composite (1) puisse être inséré dans le second panneau composite adjacent (2) dans l'arête latérale duquel se trouve un profil femelle correspondant.

6. Combinaison de panneau composite selon l'une quelconque des revendications précédentes, **caractérisée en ce qu'**une couche de bois ou de polymère formant une surface de parquet se trouve sur la surface supérieure des panneaux composites (1, 2).

7. Procédé de fabrication d'une combinaison de panneau composite selon l'une quelconque des revendications 1 à 6, **caractérisé en ce que**
- les panneaux à base de bois, ou la pile formée de panneaux à base de bois, et les couches d'isolation sont équipées de couches adhésives,
- les panneaux ou la pile, ainsi que les couches d'isolation, sont empilés sur le dessus les unes des autres dans un ordre présélectionné, après quoi
- les panneaux ou la pile et les couches d'isolation sont fixées les unes aux autres au moyen d'un simple pressage, et
- des profils de joint à rainure et languette de la forme souhaitée sont usinés dans les arêtes des panneaux composites.

8. Procédé selon la revendication 7, **caractérisée en ce que** les panneaux composites obtenus sont en outre découpés en panneaux composites avec la taille souhaitée de zone de surface.

9. Utilisation d'une combinaison de panneau composite selon l'une quelconque des revendications 1 à 6, en tant que base de contreplaqué pour du parquet ou parquet de sol.
